# EUROPÄISCHE PATENTSCHRIFT

(11) **EP 1 645 445 B1**
(45) Veröffentlichungstag und Bekanntmachung des Hinweises auf die Patenterteilung: **24.12.2008**
(21) Anmeldenummer: 04104948.7
(22) Anmeldetag: 08.10.2004
(51) Int. Cl.: B60G 11/08, B60G 11/10

(54) **Blattfederaufhängung**
Leaf spring suspension
Suspension avec ressort à lames

(43) Veröffentlichungstag der Anmeldung: 12.04.2006
(73) Patentinhaber: Ford Global Technologies, LLC, Dearborn, MI 48126 (US)
(72) Erfinder: Zandbergen, Paul, 6291 BX, Vaals (NL)
(74) Vertreter: Drömer, Hans-Carsten

(56) Entgegenhaltungen:
- EP-A- 1 378 382
- EP-B- 0 763 438
- WO-A-96/27507
- DE-A1- 1 924 175
- GB-A- 2 197 268
- US-A- 5 035 406
- PATENT ABSTRACTS OF JAPAN Bd. 016, Nr. 250 (M-1262), 8. Juni 1992 (1992-06-08) & JP 04 059406 A (HONDA MOTOR CO LTD), 26. Februar 1992 (1992-02-26)
- PATENT ABSTRACTS OF JAPAN Bd. 016, Nr. 374 (M-1293), 11. August 1992 (1992-08-11) & JP 04 121215 A (NHK SPRING CO LTD), 22. April 1992 (1992-04-22)
- CONCOURT DE L ET AL: "UNE SUSPENSION AUTOMOBILE EN COMPOSITE" COMPOSITES. PLASTIQUES RENFORCES FIBRES DE VERRE TEXTILE, CENTRE DOC. VERRE TEXTILE PLAS RE. PARIS, FR, Bd. 25, Nr. 2, 1. März 1985 (1985-03-01), Seiten 31-38, XP002010403 ISSN: 0754-0876

## Beschreibung

Die Erfindung betrifft eine Radaufhängung für ein Kraftfahrzeug mit einer quer zum Kraftfahrzeug angeordneten Blattfeder, die einen Mittelbereich und zwei einander gegenüberliegende Endbereiche aufweist, wobei die Endbereiche jeweils in einem Blattfederlager aufgenommen sind, die jeweils mit einem Fahrzeugaufbau verbunden sind, und wobei die Blattfeder an mindestens einem Radträger angelenkt ist.

Derartige Radaufhängungen sind bekannt. Die EP 1 378 382 A1 betrifft eine Radaufhängung nach dem Oberbegriff des Anspruchs 1. Die Querblattfeder weist zwei über einen Bogen verbundene Abschnitte auf. Das Blattfederlager weist eine die Blattfeder umschließende Verdickung auf, deren axiale Enden aus ebenen Flächenstücken bestehen. Die Verdickung ist von einem Mantel aus elastischem Material umgeben, welcher in einer Gehäuseschale gefaßt ist, wobei die Verdickung aus einem Kunststoff besteht, und stoffschlüssig zum Beispiel durch Aufspritzen oder Angießen mit der Blattfeder verbunden ist.

Die EP 0 763 438 B1 offenbart eine Radaufhängung für ein Kraftfahrzeug mit einer radführenden und quer zum Fahrzeug angeordneten Blattfeder, insbesondere einer Blattfeder aus Kunststoff. Die Blattfeder ist am Fahrzeugaufbau gelagert und mit ihren freien Enden am Radträger angelenkt. Die Blattfeder ist beidseitig einer Fahrzeuglängsmittelebene zwischen zwei quer zur Blattfeder liegenden Spannelementen gehalten, welche über gegenüberstehende elastische Aufnahmen in umgebenden Lagerschalen angeordnet sind. Die halbzylindrischen Spannelemente sind mit ihren ebenen Flächenabschnitten den Oberflächen der Blattfeder zugerichtet, wobei in diesen Abschnitten und/oder in der Blattfeder zusammen wirkende Verzahnungsprofile angeordnet sind.

Als ein Hauptnachteil der in der EP 0 763 438 B1 offenbarten Radaufhängung ist anzusehen, daß eine mechanische Verbindung der Blattfeder zum Spannelement mittels des Verzahnungsprofils erreicht wird. Hierbei sind steife Bauteile auf die Blattfeder aufgeklemmt. Außer dem Nachteil der sehr komplizierten Herstellung der notwendigerweise miteinander korrespondierenden Zähne verursacht das Verzahnungsprofil hohe Materialspannungen. Zudem müssen HerstellungsToleranzen extrem niedrig sein, um eine rutschfreie Verbindung zu erreichen.

Die EP 1 080 953 A1 ( entspricht US 6,390,486 B1 ) bezieht sich ebenfalls auf eine Radaufhängung für Kraftfahrzeuge mit einer radführenden und quer zum Fahrzeug angeordneten Querblattfeder, die beidseitig einer Fahrzeuglängsmittelebene zum Kraftfahrzeugaufbau gelagert ist, und die am Radträger angelenkt ist. An der Querblattfeder sind, ausgehend von deren Enden, Federarme angeordnet. Die Federarme sind mit der Querblattfeder kraftübertragend, insbesondere kraftschlüssig verbunden und stützen sich am Kraftfahrzeugaufbau ab.

Die US 2002/0000703 A1 betrifft eine Hinterradaufhängung eines Kraftfahrzeugs, die umfaßt:
- einen Fahrzeugaufbau;
- ein Paar Aufhängungsarme zur drehbaren Montage eines Paares Reifen;
- ein Querglied , welches mit dem Fahrzeugaufbau verbunden ist; und
- einen Verbundträger welcher ein äußeres Befestigungselement und ein inneres Befestigungselement aufweist, wobei das äußere Befestigungselement drehbar mit den Aufhängungsarmen verbunden ist, und wobei das innere Befestigungselement drehbar mit dem Querglied verbunden ist.

Die DE 197 50 225 A1 offenbart eine Führung für ein Rad eines Kraftfahrzeugs, mit das Rad und einen Rahmen des Kraftfahrzeugs koppelnden Radführungselementen, die zumindest in begrenzten Abschnitten elastisch verformbar ausgebildet sind. Durch eine entsprechende Ausgestaltung des Radführungselementes hängt die Verformbarkeit von der Richtung der auf das jeweilige Radführungselement aufgebrachten Kräfte und/oder Drehmomente derart ab, daß ein Anwachsen einer Quer zur Fahrtrichtung des Kraftfahrzeuges wirkende Seitenkraft eine zunehmende Veränderung des Eigenlenkverhaltens des Kraftfahrzeuges in einer gewünschten Richtung bewirkt.

Ein Radaufhängungssystem für ein Kraftfahrzeug, welches in der DE 42 01 180 A1 offenbart ist, umfaßt eine Querblattfeder, die Gelenkteile, an denen Fahrzeugräder drehbar gehalten sind, miteinander verbindet, ein Paar Gelenkteile, an denen die Fahrzeugräder drehbar gehalten sind, eine lang gestreckte Blattfeder, die vertikal federnd ist und sich relativ zur Fahrzeugkarosserie quer erstreckt. Die Blattfeder ist an ihren gegenüberliegenden Enden jeweils mit den Gelenkteilen gekoppelt. Ein Befestigungsteil trägt die Blattfeder an zwei Befestigungspunkten, die an der Blattfeder relativ zur Fahrzeugkarosserie in Querrichtung mit Abstand voneinander liegen, um eine Querbewegung der Blattfeder zu erlauben, jedoch eine Vertikalbewegung der Blattfeder relativ zur Fahrzeugkarosserie einzuschränken. Ein Querbewegungsbegrenzer soll eine Vertikalbewegung der Blattfeder erlauben, begrenzt jedoch eine Querbewegung der Blattfeder relativ zur Fahrzeugkarosserie. Der Querbewegungsbegrenzer umfaßt einen Lenkermechanismus, der einen zwischen den Befestigungspunkten liegenden Teil der Blattfeder mit der Fahrzeugkarosserie koppelt.

Die DE 43 41 559 betrifft ein Anti-Roll-System, bei dem die Auf- und Abbewegungen der beiden Räder einer Achse in Bewegungen von Elementen umgewandelt werden, die senkrecht zur Fahrzeuglängsachse verlaufen. Die Enden dieser Elemente sind mit den Enden eines elastischen Elements verbunden und drehen dieses entweder im Uhrzeiger- oder im Gegenuhrzeigersinn oder biegen es.

Die WO96/27507 bezieht sich auf eine Radaufhängung für eine Fahrzeugachse mit zwei Rädern mit einer Querblattfederung, mit Zweipunktlagerung und mit je einem Radträger. Eine einteilige, durchgehende und Rad führende Verbundwerkstoff-Querblattfeder, besteht aus einem mit großteils längsorientierten technischen Endlosfasern verstärktem Kunststoff. Die Zweipunktlagerung weist eine hohe Steifigkeit in Querrichtung auf. Die Blattfeder weist eine Federrate in Fahrtrichtung und eine Federrate in Hochrichtung auf, wobei das Verhältnis der Federraten mindestens 15 beträgt. Die Blattfederenden sind in einer Anlenkung direkt und gelenkig mit den Radträgern verbunden. Ein Längs- und Querkraft abstützendes Radführungselement ist mit dem Radträger gelenkig verbunden, so daß mit der Querblattfeder und dem Radführungselement alle Radkräfte aufnehmbar sind.

Die JP 04059406 offenbart eine Blattfederaufhängung. Der Blattfederaufhängung ist in ihrem Blattfederlager ein Block zugeordnet, der einen Buckel aufweist. An dem Buckel liegt ein elastisches Material an, das an einem Metallblech anliegt. Das Metallblech ist in eine Einbuchtung einer Verdickung der Blattfeder eingelegt, wobei das Metallblech die Einbuchtung mit seinen freien Enden überragt. Der Block liegt lediglich mit seinem Buckel in der Einbuchtung an, wobei hier das erwähnte elastische Material und das Metallblech zwischengelegt sind.

Der Erfindung liegt die Aufgabe zugrunde, eine Radaufhängung der eingangs genannten Art, mit einfachen Mitteln dahingehend zu verbessern, so daß die Funktion verschiedener Aufhängungsbauteile in einer Komponente vereint wird, wobei eine Kostenverringernde und Gewichtsreduzierte Radaufhängung zur Verfügung gestellt werden soll, die es erlaubt bestehende Radaufhängungen ohne große Veränderungen des Fahrzeugpackage zu ersetzen.

Erfindungsgemäß wird die Aufgabe dadurch gelöst, daß die Blattfeder an ihren Endbereichen an ihren, zumindest in einem Querschnitt y-z gesehen, gegenüberliegenden Oberflächen jeweils eine Einbuchtung aufweist, und daß jedes Blattfederlager zumindest in einem Querschnitt y-z gesehen innere, halbrunde Elemente aufweist, die an einer zur Blattfeder weisenden Anlagefläche zu den jeweiligen Einbuchtungen korrespondierende Buckel aufweisen, wobei die halbrunden Elemente vollumfänglich von einem elastischen Material umfaßt sind, so dass auch deren zur Blattfeder weisenden Anlageflächen mit dem Buckel von dem elastischen Material umfaßt sind.

Bei der erfindungsgemäßen Radaufhängung kann die Blattfeder bevorzugt an zwei Anbindungspunkten mit einem Hilfsrahmen, vorzugsweise mit einem vertikalen Element des Hilfsrahmens und an zwei Anbindungspunkten mit dem Radträger verbunden sein. Von daher ist die Blattfeder unter einer Vier-Punkt Biegung gebogen.

Bei einer gleichsinnigen, vertikalen Radbewegung kann die Blattfeder wie eine Primärfeder wirken, die eine durch die Biegesteifigkeit der Blattfeder vorbestimmte vertikale Steifigkeit aufweist. Bei einer gegensinnigen Radbewegung weist die Blattfeder eine höhere Steifigkeit auf, welche korrespondierend zu einer Rollsteifigkeit ausgestaltet sein sollte. Um einen Stabilisator ersetzen zu können ist daher zweckmäßig vorgesehen, daß die Rollsteifigkeit der Blattfeder höher ist als die vertikale Steifigkeit der Blattfeder. Bevorzugter Weise ist die Rollsteifigkeit der Blattfeder 2 bis 2,5 mal höher als die vertikale Steifigkeit der Blattfeder.

Um eine bestimmte vertikale Steifigkeit in Kombination mit einer bestimmten Rollsteifigkeit zu erreichen, ist es günstig im Sinne der Erfindung wenn sich die Dimensionen der Blattfeder in ihrer Längsrichtung, also quer zum Kraftfahrzeug ändern. Die Blattfeder kann eine hohe Rollsteifigkeit aufweisen, wenn die Endbereiche der Blattfeder in vertikaler Richtung im Vergleich zum Mittelbereich relativ steif ausgestaltet sind. Zweckmäßig ist daher vorgesehen, daß die Blattfeder im Querschnitt gesehen ein variables Höhen/Breiten Verhältnis aufweist. Die Querschnittsoberfläche der Blattfeder kann hierbei in Längsrichtung bevorzugt constant sein, so daß Endlosfasern verwendet werden können. Natürlich kann die Blattfeder aus einem Verbundwerkstoff hergestellt sein.

Günstig im Sinne der Erfindung ist, wenn die Blattfeder in Längsrichtung des Fahrzeugs gesehen vor einem Radmittelpunkt angeordnet ist. Die Blattfeder ist derart angeordnet, daß deren Endbereiche an dem Ort angeordnet sind, wie eine Spurstange beispielsweise einer Schwertlenkerachse. Günstigerweise ist somit die Funktion einer Spurstange in der Blattfeder integriert.

Die kinematischen und Nachgiebigkeitseigenschaften der erfindungsgemäßen Radaufhängung entsprechen der beispielhaft konventionellen Schwertlenkerachse. Auch die Einstellungsprozesse zur Optimierung der genannten Eigenschaften sind gleich. Die Vorspurcharakteristik kann über die Positionierung des Blattfederlagers eingestellt werden. Die verbleibende Aufhängungsverbindung ist ebenfalls unverändert, wobei obere und untere Querlenker beispielsweise zur Steuerung des Radsturzes und um laterale Radbelastungen zu absorbieren vorgesehen sind. Aufgrund der erfindungsgemäßen Ausgestaltung der Radaufhängungen können sowohl der obere als auch der untere Querlenker durch eine einfache Stange ersetzt werden, wobei auf eine besondere Ausgestaltung beispielsweise in A-, L- oder anderen bekannten Ausführungen der Querlenker vorteilhaft verzichtet werden kann. Ein Schwertlenker steuert die Längskinematik der Räder (anti-dive-Verhalten; anti - pitch-Verhalten), und nimmt die Längskräfte der Räder auf.

Üblicherweise wird ein Dämpfer verwendet um Radbewegungen (Ein- bzw. Ausfedern) zu dämpfen. Der Dämpfer ist nicht dazu ausgelegt, seitliche Belastungen aufzunehmen, da der Schwertlenker, der untere und obere Querlenker und die Blattfeder die komplette Radführung übernehmen. Um eine optimale Radkinematik mit einem kleinen Vorspurwinkel für den Aufhängungsfederweg zu erhalten ist vorteilhaft vorgesehen, daß die Endbereiche der Blattfeder relativ kurz sind. Die Länge entspricht bevorzugt der Länge der Spurverbindung der beispielhaft konventionellen Schwertlenkerachse. Ein Vorteil der relativ kurzen Endbereiche ist darin zu sehen, daß hierdurch ein relativ langer Mittelbereich der Blattfeder ermöglicht wird, wodurch ein hohes Verhältnis Rollsteifigkeit/vertikale Steifigkeit erreicht werden kann, wobei hohe Materialspannungen im Mittelbereich vermeidbar sind.

Da in der Blattfeder die Funktion der Spurstange integriert ist, absorbiert die Blattfeder günstiger Weise auch zumindest einen Teil der lateralen Radbelastungen. Von daher ist es zweckmäßig im Sinne der Erfindung, wenn die Blattfederlager steif ausgestaltet sind, um eine hohe laterale Aufhängungssteifigkeit zur Verfügung zu stellen, welche für eine Richtungsstabilität erforderlich ist. Aufgrund der hohen lateralen Steifigkeit erhöhen die Blattfederlager die vertikale Aufhängungssteifigkeit, welche durch die Blattfeder bereits erreicht wurde, weiter. Die Blattfederlager können sogar einer vollen Entspannung der Blattfeder entgegenwirken, wenn die Achse unbelastet ist.

Bei herkömmlichen Aufhängungen ist die Blattfeder im eingebauten Zustand im wesentlichen gerade ausgeführt. Hierbei wird beobachtet, daß die Endbereiche der Blattfeder durch den Mittelbereich nach innen gezogen werden, wenn die Räder parallel Ein- bzw. Ausfedern. Dies bewirkt eine relativ hohe Auslenkung an den Blattfederlagern und hohe Blattfederlagerkräfte. Um die Auslenkung an den Blattfederlagern zu reduzieren kann daher vorteilhaft vorgesehen sein , daß die Blattfeder in ihrem Mittelbereich einen leicht nach unten gebogenen Verlauf aufweist. Bei einer parallelen Radbewegung (Ein- bzw. Ausfedern) streckt sich damit der Mittelbereich der Blattfeder und wird dann nach oben gebogen. Während dieser Bewegung drückt der Mittelbereich der Blattfeder deren Endbereiche nach außen, und zieht diese erst anschließend nach innen. Damit wird die gesamte Einwärtsauslenkung reduziert, wodurch die Widerstandskraft kleiner ist. Dies erlaubt einen längeren Federweg. Die Ausgestaltung des Mittelbereichs kann bevorzugt derart ausgelegt werden, daß der notwendige Federweg zum Ein- bzw. Ausfedern, insbesondere an der Hinterachse erreichbar ist. Damit kann vorteilhaft auf zusätzliche Federwegbegrenzer verzichtet werden.

Die Blattfeder weist erfindungsgemäß in einem Querschnitt y-z an ihren gegenüberliegenden Oberflächen jeweils eine Einbuchtung auf. Die Einbuchtung kann bevorzugt in der Herstellungsform eingebracht, vorzugsweise eingepreßt werden, in der die Blattfeder hergestellt wird. Die Einbuchtungen können als weibliche Bestandteile einer mechanischen Verbindung des Blattfederlagers angesehen werden, welche die Blattfeder mit dem Hilfsrahmen verbindet.

Das Blattfederlager kann bevorzugt zweiteilig ausgestaltet sein und weist vorzugsweise eine obere und untere Hälfte auf. Beide Hälften weisen ein steifes inneres Element, das innere halbrunde Element auf, das von einer flexiblen Schicht, bevorzugt einem Gummi umfaßt ist. Die obere und untere Hälfte umfaßt die Blattfeder komplett. Beide Bauteile sind mittels Bolzen, bevorzugt Bolzenschrauben, vorzugsweise kraftformschlüssig verbunden. Um eine notwendige Verbindungskraft zu erreichen, ist es zweckmäßig im Sinne der Erfindung, wenn zwischen dem oberen und unteren inneren Element ein Spalt vorgesehen ist. Das innere Element ist im Querschnitt y-z gesehen bevorzugt halbkreisförmig mit einer ebenen Anlagefläche ausgestaltet, die zu den jeweiligen Oberflächen der Blattfeder weist. Günstig im Sinne der Erfindung ist, wenn die Anlageflächen einen zu den jeweiligen Einbuchungen komplementären Buckel aufweisen. Die Buckel können als männliche Bestandteile der mechanischen Verbindung des Blattfederlagers angesehen werden, welche die Blattfeder mit dem Hilfsrahmen verbindet. Bevorzugterweise liegt zwischen den beiden Hälften eine kraftschlüssige Verbindung zur Blattfeder vor.

Die inneren Elemente bes tehen bevorzugt aus einem Metall bzw. einem harten Material. Bei auftretenden Belastungen, kann das jeweilige innere Element relativ zu der Blattfeder eine Drehbewegung mit hohen Momenten ausführen, wobei das Metall bzw. das harte Material die Blattfeder zerstören kann. Um diesem Zerstörungseffekt entgegenzuwirken, ist es günstig im Sinne der Erfindung, wenn das flexible Material das jeweilige innere Element vollumfänglich, insbesondere auch die Anlagefläche mit dem Buckel umfaßt. In dem Bereich der Anlagefläche ist das flexible Material relativ dünn. Vorzugsweise weist das flexible Material eine derartige Dicke auf, daß der notwendige Kraftschluß weiter besteht, wobei die Dicke vorzugsweise einen Betrag von 1 mm aufweisen kann. Selbstverständlich kann die Dicke aber auch geringer oder größer sein, sofern der notwendige Kraftschluß gewährleistet ist.

Damit ein Druckkontakt des inneren Elementes auf die Blattfeder reduziert werden kann, ist es günstig im Sinne der Erfindung, wenn Ecken des inneren Elementes in einem Übergang zur Anlagefläche verrundet sind.

Durch die erfindungemäße Ausgestaltung, also sowohl der vollumfänglichen Anordnung des flexiblen Materials als auch der abgerundeten Ecken, wird eine Reduzierung von Spannungen in der Blattfeder bewirkt, wodurch diese ein erheblich längere Labensdauer aufweist.

Das flexible Material an der Außenseite des Blattfederlagers, also zwischen dem inneren Element und einer das flexible Material jeweils umfassenden Schale, bestimmt die Steifigkeit des Blattfederlagers in x-, y- und z-Richtung. Um eine Lagersteifigkeit in einer bestimmten Richtung einstellen bzw. reduzieren zu können, ist es zweckmäßig im Sinne der Erfindung, wenn das elastische Material Hohlräume aufweist, wodurch aber auch eine nicht-lineare Lagersteifigkeit erreichbar ist.

Die Schalen umfassen die beiden Hälften des Blattfederlagers, bevorzugt vollumfänglich, wobei in dem Querschnitt y-z gesehen jeweils beidseitig ein Ausschnitt vorgesehen ist. Der Ausschnitt ist derart ausgestaltet, daß die Blattfeder durch diesen hindurch führbar ist. Der Ausschnitt ist aber zu dem derart ausgestaltet, daß ein Anschlagen der Blattfeder an den Schalen vermieden ist, wenn die Blattfeder in Längs- und/oder Vertikalrichtung ausgelenkt wird.

Günstig im Sinne der Erfindung ist, wenn eine der Schalen ein Bestandteil des Hilfsrahmens bzw. dessen vertikalen Teils ist. Die zweite Schale kann hierbei separat mit der ersten Schale in bekannter Weise verbunden werden. D er Betrag der kraftschlüssigen Verbindung stellt die Vorspannung des Blattfederlagers ein.

Um eine Rutschbewegung des elastischen Materials zu vermeiden ist zweckmäßig vorgesehen, daß das elastische Material profiliert ist und bevorzugt an der jeweiligen Schale anliegende Anlagelippen aufweist. Selbstverständlich kann das elastische Material auch mit den Schalen stoffschlüssig verbunden, vorzugsweise verklebt sein. Denkbar ist aber auch, das elastische Material auf das innere Element aufzuvulkanisieren.

Mittels der Erfindungsgemäßen Ausgestaltung der Radaufhängung ergeben sich eine Reihe von Vorteilen.

Zunächst weist die Radaufhängung im Vergleich zu der beispielhaft konventionellen Schwertlenkerachse ein geringeres Gewicht und reduzierte Herstellungskosten auf.

Die Blattfeder ersetzt bzw. übernimmt die Funktion der Schraubenfeder, des Stabilisatorsystems und der Spurstange. Die kompliziert herzustellenden Querlenker, können aufgrund der erfindungsgemäßen Ausgestaltung der Blattfeder als einfache Stangen ausgeführt sein, da insbesondere der untere Querlenker die Schraubenfeder nicht mehr zu tragen hat.

Weiter kann auf einen Federwegbegrenzer verzichtet werden. Die kinematischen und Nachgiebigkeitseigenschaften sind auf einem vergleichbar hohen Niveau. Die erfindungsgemäße Radaufhängung erreicht das gleich hohe Verhältnis Rollsteifigkeit/vertikale Steifigkeit wie Aufhängungen mit separaten Federn und Stabilisatoren.

Normalerweise ist der Federweg einer geraden Blattfeder, welche die Funktionen der Feder und des Stabilisators übernimmt wegen der für das Blattfederlager notwendigen hohen lateral Steifigkeit begrenzt. Mittels der erfindungsgemäßen Ausgestaltung der Blattfeder mit dem leicht nach unten gebogenen Verlauf des Mittelbereiches dagegen wird ein längerer Radfederweg erreicht. Dies bewirkt, daß die laterale Aufhängungssteifigkeit sehr hoch sein kann, ohne den Federweg zu reduzieren.

Auch der Komfort (NVH) ist deutlich gestiegen, weil die Blattfeder aus einem Verbundwerkstoff herstellbar ist, welcher einen höheren Dämpfungsbetrag verglichen zu Stahl aufweist.

Die Blattfederbelastungen werden über die Blattfederlager zu dem Hilfsrahmen bzw. dessen vertikalem Teil übertragen. Von daher kann auf eine Isolation des Hilfsrahmens mittels separater Buchsen von dem Fahrzeugaufbau bzw. der Karosserie verzichtet werden.

Zudem kann die erfindungsgemäße Radaufhängung mit geringfügigen Änderungen des Fahrzeugaufbaus die beispielhafte genannte konventionelle Schwertachsenaufhängung ersetzen.

Die ursprünglich vorhandenen Schraubenfedern ragten beispielsweise in einen Gepäckraum des Kraftfahrzeugs, und beschränkten dessen Ladevolumen. Da die Schraubenfedern entfallen, kann der Kofferraum des Kraftfahrzeugs zudem mehr Ladevolumen zu Verfügung stellen.

Das B lattfederlager stellt eine Schnittstelle zur Blattfeder zur Verfügung, welche die Blattfeder auch unter hohen lateralen Radbelastungen örtlich fixiert. Das Blattfederlager kann zudem äußerst einfach hergestellt werden. Vorteilhaft ist das Blattfederlager mit seinen Bestandteilen inneres Element, elastische Schicht und Schale separat zusammensetzbar.

Die erfindungsgemäße Radaufhängung, insbesondere das Blattfederlager ist sowohl als bzw. bei Hinterradaufhängung als auch als bzw. bei Vorderradaufhängung einsetzbar.

Weitere Vorteilhafte Ausgestaltung der Erfindung sind in den Unteransprüchen und der folgenden Figurenbeschreibung offenbart. Es zeigen:
Fig. 1 eine Frontansicht einer Radaufhängung,
Fig. 2 eine Aufsicht auf die Radaufhängung aus Figur 1,
Fig. 3 einen Querschnitt y-z durch ein Blattfederlager,
Fig. 4 einen Querschnitt x-z durch das Blattfederlager aus Figur 3,
Fig. 5 eine Explosionsdarstellung des Blattfederlagers ohne Schale, und
Fig. 6 eine Frontansicht auf das Blattfederlager aus Figur 5.

In den unterschiedlichen Figuren sind gleiche Teile stets mit denselben Bezugszeichen versehen, weswegen diese in der Regel auch nur einmal beschrieben werden.

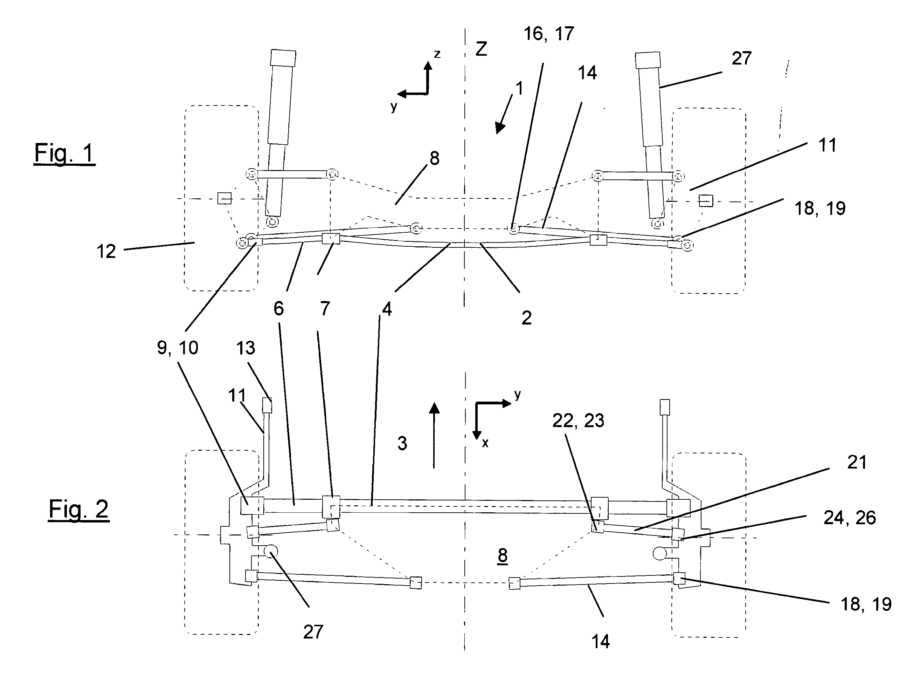

Figur 1 zeigt eine Radaufhängung 1 für ein Kraftfahrzeug. Die Radaufhängung 1 ist in dem dargestellten Ausführungsbeispiel als Hinterradaufhängung ausgestaltet, wobei in der folgenden Beschreibung auf die Hinterradaufhängung Bezug genommen wird. Selbstverständlich kann die Radaufhängung 1 auch analog als Vorderradaufhängung ausgestaltet sein.

Die Radaufhängung 1 weist eine Quer zum Kraftfahrzeug angeordnete Blattfeder 2 auf. Die Längsrichtung des Kraftfahrzeugs ist beispielhaft mittels der strichpunktierten Mittellinie Z in z-Richtung angedeutet, wobei der Pfeil 3 (Figur 2) eine gewählte Fahrtrichtung, in diesem Fall eine Vorwärtsfahrt anzeigt. Die Blattfeder 2 weist einen Mittelbereich 4 und zwei einander gegenüberliegende Endbereiche 6 auf. Die Endbereiche 6 sind jeweils in einem Blattfederlager 7 aufgenommen. Die Blattfederlager 7 sind mit einem Fahrzeugaufbau, in dem dargestellten Ausführungsbeispiel mit einem Hilfsrahmen 8 verbunden, und werden weiter unten näher beschrieben.

Die Blattfeder 2 ist mit ihren freien Enden 9 über ein Lager 10 jeweils mit einem Radträger 11 bzw. Schwertlenker verbunden, mit denen jeweils ein Rad 12 verbunden ist. Der jeweilige Endbereich 6 der Blattfeder 2 zwischen dem Blattfederlager 7 und dem Lager 10 übernimmt die Funktion einer Spurstange.

Der Radträger 11 ist über ein Lager 13 bzw. eine Buchse mit dem Fahrzeugaufbau verbunden.

Figur 1 zeigt weiter einen unteren Querlenker 14, der an seiner Innenseite 16 mit dem Hilfsrahmen 8 über ein Lager 17 bzw. ein Kugelgelenk verbunden ist. An seiner zur Innenseite 16 gegenüberliegenden Außenseite 18 ist der untere Querlenker 14 mit dem Radträger 11 über ein Lager 19 bzw. ein Kugelgelenk verbunden.

Ein oberer Querlenker 21 ist in der in Figur 2 gewählten Ansicht zwischen der Blattfeder 2 und dem unteren Querlenker 14 angeordnet. An seiner Innenseite 22 ist der obere Querlenker 21 über ein Lager 23 bzw. ein Kugelgelenk mit dem Hilfsrahmen 8 verbunden, wobei seine Außenseite 24 über ein Lager 26 bzw. ein Kugelgelenk mit dem Radträger 11 verbunden ist.

Der untere bzw. obere Querlenker 14 bzw. 21 ist jeweils als einfache Stange ausgeführt.

Ein Dämpfer 27 ist an einer Seite mit dem Fahrzeugaufbau, und an seiner dazu gegenüberliegenden Seite mit dem Radträger 11 verbunden.

Der Figur 1 ist zu entnehmen, daß der Mittelbereich 4 der Blattfeder 2 einen leicht nach unten gewölbten Verlauf bis zu den Endbereichen 6 aufweist. Von den Endbereichen 6 zu den freien Enden 9 hin ist die Blattfeder 2 im wesentlichen gerade, sich leicht nach unten neigend ausgestaltet. Von daher ist die Blattfeder 2 unter einer Vier-Punkt Biegung ausgelenkt.

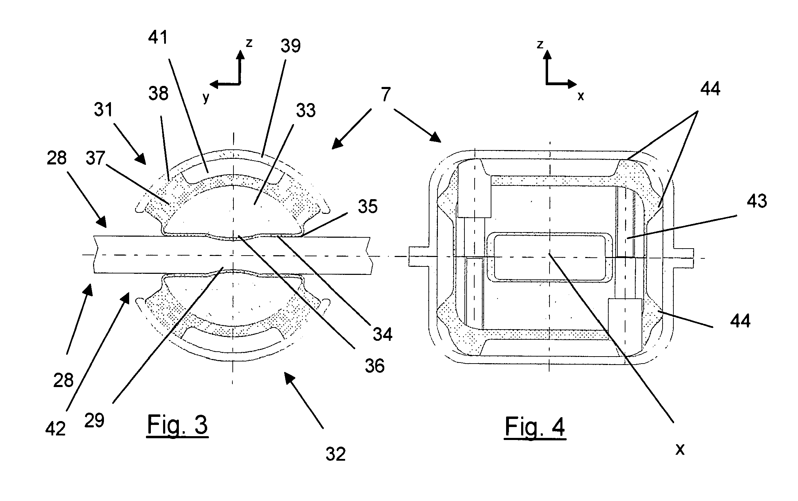

Die Figur 3 zeigt einen Querschnitt y-z durch das Blattfederlager 7. In Figur 4 ist ein zu Figur 3 senkrechter Querschnitt z-x durch das Blattfederlager 7 dargestellt.

Der Figur 3 ist deutlich zu entnehmen, daß die Blattfeder 2 an ihren Endbereichen 6 in dem Querschnitt y-z gesehen an ihren gegenüberliegenden Oberflächen 28 jeweils eine Einbuchtung 29 aufweist.

Das Blattfederlager 7 ist zweiteilig mit einer oberen und unteren Hälfte 31 und 32 ausgestaltet. Die beiden Hälften 31 und 32 sind identisch ausgestaltet, weswegen nachfolgend lediglich eine Hälfte 31 beschrieben wird.

Das Blattfederlager 7 weist ein inneres Element 33 auf, das im Querschnitt y-z gesehen halbkreisförmig mit einer ebenen Anlagefläche 34 ausgestaltet ist. In einem Übergang zur Anlagefläche 34 sind Ecken 35 verrundet. Die Anlagefläche 34 zeigt zu einer der Oberflächen 28 der Blattfeder 2, und weist einen Buckel 36 auf. Der Buckel 36 ist komplementär zur Einbuchtung 29 ausgestaltet. Das innere Element 33 besteht bevorzugt aus einem Metall.

Das innere Element 33 ist vollumfänglich von einem flexiblen Material 37 umgeben, so daß auch die Anlagefläche 34 mit dem Buckel 36 von dem flexiblen Material 37 umfaßt ist. Das flexible Material 37 ist vorzugsweise ein Gummi und kann einstückig hergestellt sein. Bevorzugt wird das flexible Material 37 vollumfänglich um das innere Element 33 gelegt, wobei freie Enden miteinander verbunden werden. Möglich ist aber auch, daß das flexible Material 37 einteilig ausgestaltet ist und eine Tasche zur Aufnahme des inneren Elementes 33 aufweist, in die das innere Element 33 eingebracht wird.

Das flexible Material 37 ist an seinem Außenumfang 38 von einer Schale 39 umgeben, wobei das flexible Material 37 an der Außenseite des Blattfederlagers 7, also zwischen dem inneren Element 33 und der jeweils umfassenden Schale 39, die Steifigkeit des Blattfederlagers in x-, y- und z-Richtung bestimmt. Um eine Lagersteifigkeit in einer bestimmten Richtung reduzieren zu können, weist das elastische Material 37 Hohlräume 41 bzw. Ausnehmungen auf, wodurch aber auch eine nicht-lineare Lagersteifigkeit erreichbar ist.

Die Hohlräume 41 bzw. Ausnehmungen sind in dem in Figur 3 dargestellten Ausführungsbeispiel jeweils in einem Zenit des Blattfederlagers 7 angeordnet, und zur Schale 39 hin geöffnet.

Die Schalen 39 umfassen die beiden Hälften 31 und 32 des Blattfederlagers 7, bevorzugt vollumfänglich (Figur 4), wobei in dem Querschnitt y-z (Figur 3) gesehen jeweils ein Ausschnitt 42 beidseitig, also in dem in Figur 3 dargestellten Ausführungsbeispiel rechts und links vorgesehen ist. Der Ausschnitt 42 ist derart ausgestaltet, daß die Blattfeder 2 durch diesen hindurch führbar ist. Der Ausschnitt 42 ist aber zu dem derart ausgestaltet, daß ein Anschlagen der Blattfeder 2 an den Schalen 39 vermieden ist, wenn die Blattfeder 2 in Längs- und/oder Vertikalrichtung ausgelenkt wird.

Die beiden Hälften 31 und 32 des Blattfederlagers 7 sind mittels Bolzen 43, bevorzugt Schraubenbolzen genügend miteinander verbunden (Figur 4), so daß eine kraftschlüssige Verbindung, vorzugsweise eine Klemmverbindung zwischen dem Blattfederlager 2, insbesondere der inneren Elemente 33 mit ihrem Buckel 36 und der Blattfeder 2, insbesondere mit ihrer Einbuchtung 29 vorliegt.

Die Schalen 39 verbinden das Blattfederlager 7 mit dem Hilfsrahmen 8.

Um eine Rutschbewegung des elastischen Materials 37 relativ zur Schale 39 zu vermeiden ist das elastische Material 37 profiliert, und weist bevorzugt an der jeweiligen Schale 39 anliegende Anlagelippen 44 auf (Figur 4). Selbstverständlich kann das elastische Material 37 auch mit den Schalen 39 stoffschlüssig verbunden, vorzugsweise verklebt sein. Die Anlagelippen 44 sind in dem in Figur 4 gezeigten Querschnitt z-x bezogen auf einen Mittelpunkt x spiegelbildlich angeordnet, was bedeutet, daß die jeweils schräg gegenüberliegenden Anlagelippen 44 gleich ausgestaltet sind, was aber nicht unbedingt sein muß, sofern eine genügende Rutschsicherheit gegeben ist.

Der Figur 4 ist weiter zu entnehmen, daß ein Breiten/Höhen-Verhältnis derart gewählt ist, daß die Blattfeder in dem Querschnitt z-x gesehen breiter als hoch ist. Die Blattfeder 2 ist in der in Figur 2 gewählten Ansicht in der gewählten Fahrtrichtung (Pfeil 3) vorteilhaft vor einem Radmittelpunkt angeordnet.

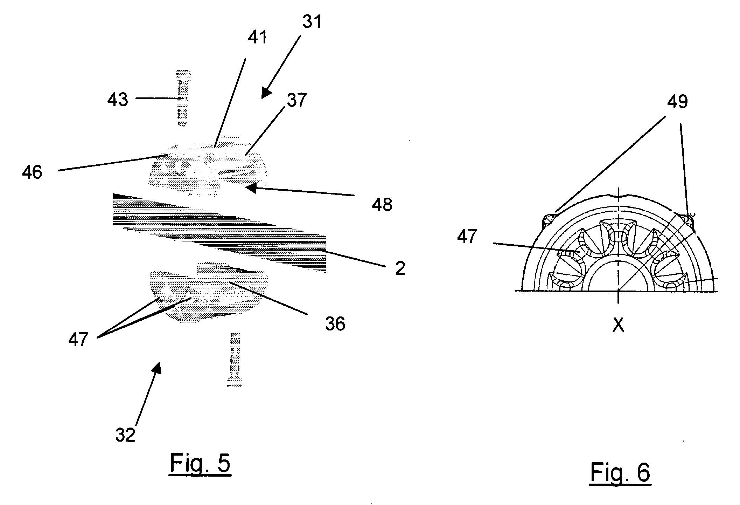

Das elastische Material 37 weist an seinen Stirnseiten 46 Erhebungen 47, bevorzugt Noppen auf, um eine Längssteifigkeit des Blattfederlagers 7 einstellen zu können. Die Erhebungen 47 sind in dem dargestellten Ausführungsbeispiel pyramidenartig mit abgestumpfter Spitze ausgeführt. Selbstverständlich können die Erhebungen 47 in jeder sinnvollen Ausführung ausgestaltet sein, um die Längssteifigkeit entsprechend einstellen zu können. Die Erhebungen 47 bestimmen die nicht-lineare Charakteristik des Blattfederlagers 7. Die Steifigkeit kann leicht durch eine unterschiedliche Anzahl von Erhebungen 47 an der jeweiligen Stirnseite 46 und durch die variable Ausgestaltung der Erhebungen 47 eingestellt werden. In Figur 5 sind die beiden Schalen 39 nicht dargestellt. Allerdings ist der Figur 5 entnehmbar, daß das elastische Material 37 entsprechend zu den Ausschnitten 42 ausgestaltete Fenster 48 aufweist, wobei die jeweilige Schale 39 das jeweilige Fenster 48 etwas überragt (Figur 3). Die Fenster 48 weisen in einer bevorzugten Ausgestaltung die gleichen Dimensionen auf, wie die Hohlräume 41 bzw. Ausnehmungen.

Um die Rutschfestigkeit bzw. einen Reibschluß zwischen dem elastischen Material 37 und den Schalen 39 zu erhöhen, können in einer vorteilhaften Ausgestaltung der Erfindung Rippen 49 an dem Außenumfang des elastischen Materials 37 vorgesehen sein (Figur 6). In dem in Figur 6 dargestellten Ausführungsbeispiel sind zwei Rippen auf dem Außenumfang des elastischen Materials 37 angeordnet, die jeweils bezogen auf eine Mittelachse X in einem 45° Winkel angeordnet sind. Selbstverständlich können die Rippen auch in anderen Winkeln bezogen auf die Mittelachse X angeordnet sein, wobei auch denkbar ist mehrere Rippen 47 vorzusehen.

## Patentansprüche

1. Radaufhängung für ein Kraftfahrzeug mit einer Quer zum Kraftfahrzeug angeordneten Blattfeder (2), die einen Mittelbereich (4) und zwei einander gegenüberliegende Endbereiche (6) aufweist, wobei die Endbereiche (6) jeweils in einem Blattfederlager (7) aufgenommen sind, die jeweils mit einem Fahrzeugaufbau verbunden sind, und wobei die Blattfeder (2) an mindestens einem Radträger (11) angelenkt ist,
**dadurch gekennzeichnet, daß**
die Blattfeder (2) an ihren Endbereichen (6) an ihren, zumindest in einem Querschnitt (y-z) gesehen, gegenüberliegenden Oberflächen (28) jeweils eine Einbuchtung (29) aufweist, und daß jedes Blattfederlager (7) zumindest in dem Querschnitt (y-z) gesehen innere, halbrunde Elemente (33) aufweist, die an einer zur Blattfeder (2) weisenden Anlagefläche (34) zu den jeweiligen Einbuchtungen (29) korrespondierende Buckel (36) aufweisen, wobei die halbrunden Elemente (33) vollumfänglich von einem elastischen Material (37) umfaßt sind, so dass auch deren zur Blattfeder (2) weisenden Anlageflächen (34) mit dem Buckel (36) von dem elastischen Material (37) umfaßt sind.

2. Radaufhängung nach Anspruch 1,
**dadurch gekennzeichnet, daß**
die Blattfeder (2) in einem Querschnitt (z-x) gesehen ein variables Breiten/Höhen-Verhältnis aufweist.

3. Radaufhängung nach Anspruch 1 oder 2,
**dadurch gekennzeichnet, daß**
die Blattfeder (2) in Längsrichtung des Kraftfahrzeugs vor einem jeweiligen Radmittelpunkt angeordnet ist.

4. Radaufhängung nach einem der Ansprüche 1 bis 3,
**dadurch gekennzeichnet, daß**
die Endbereiche (6) der Blattfeder (2) relativ kurz sind, wobei der Mittelbereich (4) relativ lang ausgestaltet ist.

5. Radaufhängung nach einem der Ansprüche 1 bis 4,
**dadurch gekennzeichnet, daß**
die Blattfeder (2) in ihrem Mittelbereich (4) einen leicht nach unten gebogenen Verlauf aufweist.

6. Radaufhängung nach einem der Ansprüche 1 bis 5,
**dadurch gekennzeichnet, daß**
das Blattfederlager (7) zweiteilig mit einer oberen und unteren Hälfte (31, 32) ausgestaltet ist, wobei beiden Hälften (31, 32) jeweils das innere Element (33) zugeordnet ist.

7. Radaufhängung nach einem der Ansprüche 1 bis 6,
**dadurch gekennzeichnet, daß**
das flexible Material (37) im Bereich der Anlageflächen (34) eine derartige Dicke aufweist, dass ein notwendiger Kraftschluß weiter besteht.

8. Radaufhängung nach einem der Ansprüche 1 bis 7,
**dadurch gekennzeichnet, daß**
Ecken (35) des inneren Elementes (33) im Übergang zur Anlagefläche (34) verrundet sind.

9. Radaufhängung nach einem der Ansprüche 1 bis 8,
**dadurch gekennzeichnet, daß**
das elastische Material (37) Hohlräume (41) aufweist, wobei das elastische Material (37) profiliert ist

## Claims

1. Wheel suspension for a motor vehicle, having a leaf spring (2) which is arranged transversely to the motor vehicle and has a centre region (4) and two opposite end regions (6), the end regions (6) each being accommodated in a leaf spring mount (7), the leaf spring mounts (7) each being connected to a vehicle structure, and the leaf spring (2) being linked to at least one wheel carrier (11), **characterized in that** the leaf spring (2), at its end regions (6), has a respective niche (29) on its opposite surfaces (28) at least as viewed in a cross section (y-z), and **in that** each leaf spring mount (7), at least as viewed in the cross section (y-z), has inner, half-round elements (33) which, at a locating surface (34) pointing toward the leaf spring (2), have bulges (36) corresponding to the respective niches (29), the half-round elements (33) being enclosed by an elastic material (37) over the full circumference, so that even their locating surfaces (34) which points toward the leaf spring (2) and which have the bulge (36) are enclosed by the elastic material (37).

2. Wheel suspension according to claim 1, **characterized in that** the leaf spring (2) has a variable width/height ratio as viewed in a cross section (z-x).

3. Wheel suspension according to claim 1 or 2, **characterized in that** the leaf spring (2) is arranged in front of a respective wheel centre point in the longitudinal direction of the motor vehicle.

4. Wheel suspension according to one of claims 1 to 3, **characterized in that** the end regions (6) of the leaf spring (2) are relatively short, the centre region (4) being designed to be relatively long.

5. Wheel suspension according to one of claims 1 to 4, **characterized in that** the leaf spring (2) runs in such a way that it is arched slightly downward in its centre region (4).

6. Wheel suspension according to one of claims 1 to 5, **characterized in that** the leaf spring mount (7) is of two-piece design with a top and a bottom part (31, 32), the inner elements (33) being assigned in each case to both halves (31, 32).

7. Wheel suspension according to one of claims 1 to 6, **characterized in that** the flexible material (37) in the region of the locating surfaces (34) has such a thickness that a requisite friction grip is retained.

8. Wheel suspension according to one of claims 1 to 7, **characterized in that** corners (35) of the inner element (33) at the transition to the locating surface (34) are rounded.

9. Wheel suspension according to one of claims 1 to 8, **characterized in that** the elastic material (37) has cavities (41), the elastic material (37) being profiled.

## Revendications

1. Suspension de roue pour un véhicule automobile, comprenant un ressort à lames (2) disposé transversalement au véhicule automobile, qui présente une région centrale (4) et deux régions d'extrémité opposées l'une à l'autre (6), les régions d'extrémité (6) étant à chaque fois reçues dans un palier de ressort à lames (7), qui est connecté respectivement à une carrosserie du véhicule, le ressort à lames (2) étant articulé à au moins un support de roue (11),
**caractérisée en ce que**
le ressort à lame (2) présente au niveau de ses régions d'extrémité (6), sur ses surfaces opposées (28), au moins vu en section transversale (y-z), à chaque fois un renfoncement (29), et **en ce que** chaque palier de ressort à lames (7) présente des éléments semi-circulaires internes (33), au moins vu en section transversale (y-z), qui présentent sur une surface d'appui (34) tournée vers le ressort à lames (2), des renflements (36) correspondant aux renfoncements respectifs (29), les éléments semi-circulaires (33) étant entourés sur toute leur périphérie par un matériau élastique (37), de sorte que leurs surfaces d'appui (34) tournées vers le ressort à lames (2), avec le renflement (36), soient également entourées par le matériau élastique (37).

2. Suspension de roue selon la revendication 1,
**caractérisée en ce que**
le ressort à lames (2) présente un rapport largeur/hauteur variable, vu en section transversale (z-x).

3. Suspension de roue selon la revendication 1 ou 2,
**caractérisée en ce que**
le ressort à lames (2) est disposé dans la direction longitudinale du véhicule automobile devant un centre de roue respectif.

4. Suspension de roue selon l'une quelconque des revendications 1 à 3,
**caractérisée en ce que**
les régions d'extrémité (6) du ressort à lames (2) sont relativement courtes, la région centrale (4) étant relativement longue.

5. Suspension de roue selon l'une quelconque des revendications 1 à 4,
**caractérisée en ce que**
le ressort à lames (2) présente une allure légèrement cintrée vers le bas dans sa région centrale (4).

6. Suspension de roue selon l'une quelconque des revendications 1 à 5,
**caractérisée en ce que**
le palier de ressort à lames (7) est configuré en deux parties avec une moitié supérieure et une moitié inférieure (31, 32), l'élément interne (33) étant à chaque fois associé aux deux moitiés (31, 32).

7. Suspension de roue selon l'une quelconque des revendications 1 à 6,
**caractérisée en ce que**
le matériau flexible (37) dans la région des surfaces d'appui (34) présente une épaisseur telle qu'un engagement par force nécessaire est maintenu.

8. Suspension de roue selon l'une quelconque des revendications 1 à 7,
**caractérisée en ce que**
les coins (35) de l'élément interne (33) sont arrondis au niveau de la transition à la surface d'appui (34).

9. Suspension de roue selon l'une quelconque des revendications 1 à 8,
**caractérisée en ce que**
le matériau élastique (37) présente des espaces creux (41), le matériau élastique (37) étant profilé.
